(19) Europäisches Patentamt / European Patent Office / Office européen des brevets

(11) **EP 4 254 276 A1**

(12) **EUROPEAN PATENT APPLICATION**

(43) Date of publication:
**04.10.2023 Bulletin 2023/40**

(51) International Patent Classification (IPC):
***G06N 10/60*** (2022.01)

(21) Application number: **23158503.5**

(52) Cooperative Patent Classification (CPC):
**G06N 10/60**

(22) Date of filing: **24.02.2023**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.03.2022 US 202217709152**

(71) Applicant: **Fujitsu Limited
Kawasaki-shi, Kanagawa 211-8588 (JP)**

(72) Inventor: **UPADHYAY, Sarvagya
San Jose, California, 95134 (US)**

(74) Representative: **Hoffmann Eitle
Patent- und Rechtsanwälte PartmbB
Arabellastraße 30
81925 München (DE)**

(54) **QUADRATIC FORM OPTIMIZATION**

(57) A method may include obtaining an optimization problem and a quadratic form corresponding to the optimization problem and identifying vectors that represent the quadratic form. The method may include setting a dimensionality of each vector that indicates a number of terms included in each vector and generating a first set of unit vectors based on the dimensionality of the vectors and based on a coefficient corresponding to each of the vectors. The method may include iteratively performing unitary operations to quantize each respective unit vector included in the first updated set as a respective indexed quantum state. The method may include setting a respective final quantum state corresponding to each respective indexed quantum state and determining one or more feasible solutions to the optimization problem based on the final quantum state corresponding to each respective indexed quantum state.

FIG. 1

**Description**

The present disclosure generally relates to quadratic form optimization.

**BACKGROUND**

An optimization problem may be solved by finding an input value that returns a maximum value or a minimum value for a function that represents the optimization problem. Solving the optimization problem may be difficult because the time required to determine a feasible solution to the optimization problem, and the time needed to determine a feasible solution may increase exponentially depending on the number of variables that must be optimized to solve the optimization problem.

A quadratic form is a mathematical polynomial that may represent an optimization problem in which each term of the polynomial has a degree equal to two. In other words, exponents corresponding to each term of the polynomial have a sum of two. The polynomial in the quadratic form may include any number of terms and any number of variables so long as each term of the polynomial has a degree of two.

The subject matter claimed in the present disclosure is not limited to embodiments that solve any disadvantages or that operate only in environments such as those described above. Rather, this background is only provided to illustrate one example technology area where some embodiments described in the present disclosure may be practiced.

**SUMMARY**

According to an aspect of an embodiment, a method may include obtaining an optimization problem and a quadratic form corresponding to the optimization problem and identifying vectors that represent the quadratic form. The method may include setting a dimensionality of each vector that indicates a number of terms included in each vector and generating a first set of unit vectors based on the dimensionality of the vectors and based on a coefficient corresponding to each of the vectors. The method may also include iteratively performing unitary operations to quantize each respective unit vector included in the first updated set as a respective indexed quantum state. The method may additionally include setting a respective final quantum state corresponding to each respective indexed quantum state and determining one or more feasible solutions to the optimization problem based on the final quantum state corresponding to each respective indexed quantum state.

The object and advantages of the embodiments will be realized and achieved at least by the elements, features, and combinations particularly pointed out in the claims. It is to be understood that both the foregoing general description and the following detailed description are explanatory and are not restrictive of the invention, as claimed.

**BRIEF DESCRIPTION OF THE DRAWINGS**

Example embodiments will be described and explained with additional specificity and detail through the accompanying drawings in which:

Figure 1 is a diagram of an example embodiment of a system for determining a solution to an optimization problem having a quadratic form according to the present disclosure;
Figure 2 is a flowchart of an example method of determining a solution to an optimization problem having a quadratic form according to the present disclosure;
Figure 3 is a flowchart of an example method of quantizing unit vectors to determine quantum states according to the present disclosure;
Figure 4 is a flowchart of an example method of quantum rounding according to the present disclosure; and
Figure 5 is an example computing system.

**DETAILED DESCRIPTION**

Quadratic forms may be used to represent various different optimization problems, such as quadratic unconstrained binary optimization problems, relating to graph theory, clustering, machine learning, or other fields by representing such problems using variables constrained to discrete choices, such as states of -1 or 1. However, identifying an optimized solution to a particular quadratic form may be a difficult computational problem to solve because variables associated with the particular quadratic form may be constrained to the discrete choices.

A general quadratic form that includes n variables may be represented as the following function, Q:

$$Q(x_1, x_2, x_3, \dots, x_n) = a_{11}x_1^2 + a_{12}x_1x_2 + \cdots + a_{1n}x_1x_n + a_{21}x_2x_1 + a_{22}x_2^2 + \cdots + a_{nn}x_n^2 \qquad (1)$$

in which each of the variables, $x_n$, are related according to a corresponding coefficient, $a_{nn}$. The general quadratic form may be represented as a summation relating the coefficients and the variables:

$$Q(x_1, x_2, x_3, \dots, x_n) = \sum_{i,j}^{n} a_{ij}x_i x_j \qquad (2)$$

Because each term of the quadratic form is modified according to a coefficient related to two variables, the general quadratic form may additionally or alternatively be represented by a matrix $A$ in which the coefficients, $a_{ij}$, are represented by intersections between rows and columns of the matrix.

To determine feasible solutions to a particular quadratic form, a convex relaxation approach may be used to approximate the particular quadratic form. For example, a matrix of a quadratic form may be written with a nonconvex constraint as:

$$max\langle A, X \rangle \text{ subject to } X = xx^T \text{ and } X_{ii} = x_i^2 = 1 \qquad (3)$$

in which the $X = xx^T$ constraint is a nonconvex constraint relating to the matrix of the quadratic form that may be relaxed to an easier-to-solve constraint by indicating that $X$ is positive semidefinite (i.e., $X \succeq 0$). As such, the quadratic form may be rewritten as:

$$max\langle A, X \rangle \text{ subject to } X \succeq 0 \text{ and } X_{ii} = 1 \qquad (4)$$

Positive semidefinite matrices, such as $X$, may be expressed by a set of vectors such that $X_{ij} = \langle v_i, v_j \rangle$, and the constraint $X_{ii} = 1$ indicates that vectors included in the set of vectors are unit vectors such that $\langle v_i, v_j \rangle = \|v_i\|^2 = 1$. The quadratic form may be represented as the following vector form:

$$\max_{v_i \in \mathbb{R}^n : \|v_i\|=1} \sum_{i,j=1}^{n} A_{ij}\langle v_i, v_j \rangle \qquad (5)$$

However, solving the vector form described in Equation (5) to determine a feasible solution to the quadratic form via a process called semi definite programming may still be computationally intensive and require a large amount of computation resources and/or time because computation of the vectors may involve a complicated matrix decomposition process.

The present disclosure relates to, among other things, a system and a method of quantizing quadratic forms such that the vectors corresponding to the quadratic forms may be represented by quantum states associated with a quantum computing system, and one or more feasible solutions to the optimization problems with which the quadratic forms are associated may be determined by the quantum computing system according to the present disclosure. Determining solutions to the optimization problems may involve setting values for the variables of the optimization problem. However, optimizing the solutions to the optimization problems may be difficult and time-consuming for computer systems because the variables are constrained to discrete choices.

Optimization of quadratic forms according to the present disclosure may provide various improvements over existing processes of determining and optimizing feasible solutions corresponding to the quadratic forms. For example, optimization of quadratic forms according to the present disclosure may be more memory-efficient than existing methods, such as semidefinite programming or other convex relaxation approaches. Additionally or alternatively, optimization of quadratic forms according to the present disclosure may be more applicable to larger matrices corresponding to more complicated quadratic forms and/or decrease the amount of time taken to determine a feasible solution to a particular quadratic form. Consequently, the system and method of optimizing quadratic forms according to the present disclosure may improve operations of computer systems configured to implement and/or solve problems that involve quadratic forms.

Embodiments of the present disclosure are explained with reference to the accompanying figures.

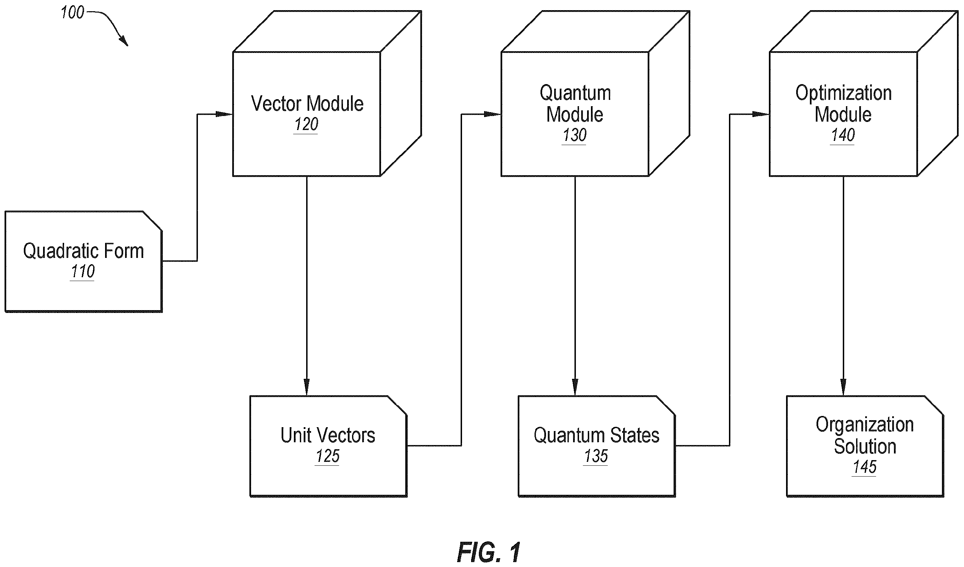

Figure 1 is a diagram of an example embodiment of a computer system 100 for determining an optimization solution 145 to an optimization problem having a quadratic form 110 according to the present disclosure. For example, the optimization problem may relate to community detection relating to users of a social network, a maximum cut problem, a correlation clustering problem for data mining, or any other types of optimization problems in which one or more inputs to the optimization problems are adjusted to affect an output to the optimization problem. The quadratic form 110 may be represented by a set that includes one or more vectors. The quadratic form 110 and/or the set of corresponding vectors may be obtained by a vector module 120 to generate a set of unit vectors 125 based on the quadratic form 110.

In some embodiments, the system 100 may include the vector module 120, a quantum module 130, and/or an optimization module 140. Elements of the system 100, including, for example, the vector module 120, the quantum module 130, and/or the optimization module 140 (collectively referred to as "computing modules"), may include code and routines configured to enable a computing system to perform one or more operations. Additionally or alternatively, the computing modules may be implemented using hardware including a processor, a microprocessor (e.g., to perform or control performance of one or more operations), a field-programmable gate array (FPGA), or an application-specific integrated circuit (ASIC). In some other instances, the computing modules may be implemented using a combination of hardware and software. In the present disclosure, operations described as being performed by the computing modules may include operations that the computing modules may direct one or more corresponding systems to perform. The computing modules may be configured to perform a series of operations with respect to the quadratic form 110, unit vectors 125, quantum states 135, and/or an optimization solution 145 as described in further detail below.

The vector module 120 may be configured to generate and update unit vectors based on the vectors associated with the quadratic form 110. In some embodiments, the vector module 120 may use a semidefinite programming relaxation approach called the mixing method to specify a dimensionality of each of the vectors, in which the dimensionality indicates a number of terms included in each of the vectors, so that each vector included in the set has the same dimensionality, and correspondingly, the same number of terms; the set of vectors may be considered a set of unit vectors 125 because each vector included in the set includes the same dimensionality (i.e., a unit length). The dimensionality of a particular vector may be determined by squaring each individual term included in the particular vector and summing the squared terms. A square root of the sum may indicate the dimensionality of the particular vector. In these and other embodiments, the mixing method may include updating the set of unit vectors according to the following mathematical relationship:

$$v_i^{(t+1)} \sim \sum_{j:j \neq i}^{n} A_{ij} v_j^{(t)} \tag{6}$$

in which $v_j^{(t)}$ represents the set of unit vectors 125, $A_{ij}$ represents matrix entries that correspond to coefficients corresponding to the set of unit vectors, and $v_i^{(t+1)}$ represents a first updated set of unit vectors 125 after summing the set of unit vectors according to Equation (6). The Equation (6) may be iteratively performed to determine a second, a third, a fourth, or any other number of updated sets of unit vectors 125. In some situations, performance of the Equation (6) may result in vectors having dimensionalities different from the vectors included in the set of unit vectors 125 and the vectors resulting from the summation described in Equation (6) may be normalized to generate the first updated set of unit vectors 125. In some embodiments, normalization of a particular vector may involve dividing the particular vector by a length of the particular vector, which may be indicated by the dimensionality of the particular vector as described above.

Because quantum states may correspond to vectors of unit length in a Hilbert space, the unit vectors 125 determined by the vector module 120 may be quantized to generate the quantum states 135 according to one or more unitary operations that cause linear transformations of the Hilbert space while preserving an inner product associated with a vector space of the unit vectors 125. In some embodiments, a number of quantum registers may be initialized in a zero state, $|0\rangle$. Unitary operations, $U_i$ and/or $V_j$, corresponding to each row and/or each column of a vector coefficient matrix, A, may be applied to the quantum registers according to the following relationships:

$$|0\rangle \xrightarrow{U_i} \sum_{j=1}^{n} A_{ij} |j\rangle \tag{7}$$

$$|0\rangle \xrightarrow{V_j} \sum_{i=1}^{n} A_{ij} |i\rangle \tag{8}$$

The unitary operations may be performed iteratively up to a normalization factor to preserve a length of each of the vectors to which the quantum states correspond so that each of the unit vectors may be mapped to another unit vector. Consequently, each of the quantum states may also be mapped to other quantum states by the unitary operations. In some embodiments, the unitary operations may be repeatedly performed up to the normalization factor according to the summation described above in Equations (7) and (8) to specify the quantum states 135 corresponding to each index ranging from a first index, $i_o$, to a final index, $i_T$, in relation to an initial vector in each index, $v_{io}^{(0)}$, of the following form:

$$\sum_{i_{T-1}=1}^{n} \cdots \sum_{i_0=1}^{n} A_{i_T i_{T-1}} A_{i_{T-1} i_{T-2}} A_{i_{T-2} i_{T-3}} \cdots A_{i_1 i_0} |i_{T-1}\rangle |i_{T-2}\rangle \cdots |i_0\rangle |v_{i_0}^{(0)}\rangle \qquad (9)$$

in which the coefficients, $A_{i_T i_{T-1}}$, $A_{i_{T-1} i_{T-2}}$, $A_{i_{T-2} i_{T-3}}$, etc., indicate amplitudes corresponding to each successive iteration of the initial vector, $v_{io}^{(0)}$, up to a T-th iteration corresponding to the *T*-th quantum register.

The quantum states 135 may be obtained by the optimization module 140 to determine final quantum states that indicate one or more feasible solutions to the quadratic form 110, such as the optimization solutions 145. In some embodiments, amplitudes corresponding to the coefficients represented in Equation (9) may be amplified to a threshold amplitude to increase the probability that the first quantum register has an outcome of zero. In other words, the first quantum register is more likely to be 10) at greater amplitudes. Following the amplitude amplification process, the quantum states 135 represented by the expression in Equation (9) may be simplified as the following Equation (10) in which the coefficients $A_{i_T i_{T-1}} A_{i_{T-1} i_{T-2}} A_{i_{T-2} i_{T-3}} \cdots A_{i_1 i_0}$ are generalized as a single coefficient $\alpha_{ij}$ for a particular index *i*:

$$\sum_{i=1}^{n} \alpha_i |i\rangle |v_i\rangle = \sum_{j=1}^{n} \alpha_{ij} \left| v_j^{(0)} \right\rangle \qquad (10)$$

Additionally or alternatively, a quantum rounding process may be used to determine a final quantum state assignment. The quantum rounding process may include creating multiple (e.g., ten, twenty, thirty, fifty, one hundred, or any other number of) random quantum states, $|\lambda_k\rangle$, corresponding to each of the indexed quantum states, $|v\rangle$. Applying a Hadamard transformation to each of the random quantum states may generate a resulting qubit, $|\psi_k\rangle$, that may include a dot product having the following value:

$$|\psi_k\rangle = \frac{1}{\sqrt{2}} (|0\rangle |v\rangle + |1\rangle |\lambda_k\rangle) \qquad (11)$$

Measuring the resulting qubit may yield a result of 0 or 1 in which a result of 1 indicates that the probability of the dot product of the vector, v, and the random quantum state, $\lambda_k$, being negative is greater than the dot product of the vector and the random quantum state being positive. Conversely, a result of 0 indicates that the probability of the dot product of the vector and the random quantum state being positive is greater than the probability of the dot product being negative. Based on the measurement of the resulting qubit and the related probability of the dot product being positive or negative, a final quantum state corresponding to the quadratic form may be set. For example, a particular final quantum state may be assigned a value of -1 responsive to the measurement of the resulting qubit being 1, and the particular final quantum state may be assigned a value of 1 responsive to the measurement of the resulting qubit being 0.

In these and other embodiments, the final quantum states may represent a feasible solution to the optimization problem associated with the convex relaxation of the quadratic form 110. For example, the values assigned to the final quantum states may represent a possible optimization solution 145 in which the values of the final quantum states may be set as values of the variables in the original discrete form of the quadratic form 110.

For example, a particular optimization problem may be a community detection problem relating to users on a social media network, and the optimization solution 145 may represent one or more groups of users identified within the social media network. The social media network may include numerous users with various connections between a particular user and multiple other users of the social media network, and identifying particular groups within the social media network may be complex and challenging due to the large number of users and connections between the users. Modeling the social media network as an optimization problem that includes the quadratic form 110 may facilitate determination of one or more optimization solutions 145 that include one or more detected groups of users of the social media network.

As another example, a particular optimization problem may be a correlation clustering problem involving a large number of data points. One or more of the data points may be grouped according to similarities between the data points, but such grouping of the data points may be complicated by the large number of data points to be grouped. In this example, the data points may be represented as the quadratic form 110, and one or more of the optimization solutions 145 to the correlation clustering problem may include partitioning the data points into one or more groups.

As another example, a particular optimization problem may be a maximum cut problem involving a graph dataset including multiple nodes and multiple edges connecting one or more of the nodes to other nodes included in the graph dataset. The maximum cut problem may involve partitioning the graph dataset into a first set of nodes and a second set of nodes using a single "cut" such that a number of edges between nodes included in the first set of nodes and nodes included in the second set of nodes is as large as possible. The optimization solution 145 may indicate a particular cut of the graph dataset that separates the graph dataset into a particular first set of nodes and a particular second set of nodes that includes as many edges connecting nodes between the particular first set and the particular second set as possible.

Modifications, additions, or omissions may be made to the system 100 without departing from the scope of the present disclosure. For example, the designations of different elements in the manner described is meant to help explain concepts described herein and is not limiting. For instance, in some embodiments, the vector module 120, the quantum module 130, and the optimization module 150 are delineated in the specific manner described to help with explaining concepts described herein but such delineation is not meant to be limiting. Further, the system 100 may include any number of other elements or may be implemented within other systems or contexts than those described.

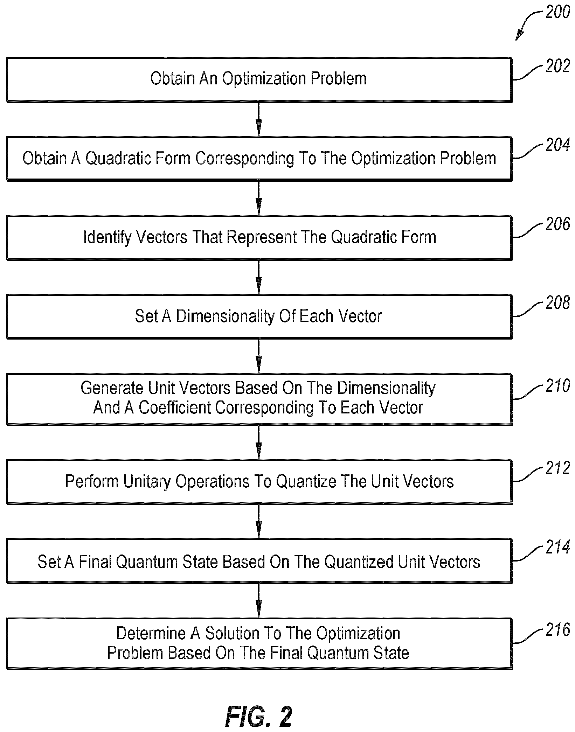

Figure 2 is a flowchart of an example method 200 of determining a solution to an optimization problem having a quadratic form according to the present disclosure. The method 200 may be performed by any suitable system, apparatus, or device. For example, the vector module 120, the quantum module 130, and the optimization module 150 may perform one or more operations associated with the method 200. Although illustrated with discrete blocks, the steps and operations associated with one or more of the blocks of the method 200 may be divided into additional blocks, combined into fewer blocks, or eliminated, depending on the particular implementation.

The method may begin at block 202, where an optimization problem that includes multiple discrete variable choices is obtained. The optimization problem may include multiple variables in which inputs to each of the variables affects a particular output relating to the optimization problem. For example, the optimization problem may be a community detection problem relating to a social media network, a maximum cut problem relating to a graph dataset, or a correlation clustering problem relating to a set of data points as previously described or any other types of optimization problems.

At block 204, where a quadratic form corresponding to an optimization problem is obtained. The optimization problem may involve a problem that includes multiple inputs in which different values corresponding to the inputs may affect changes in the outcome of the problem. The optimization problem may be represented by the quadratic form, which may include various variables that are related to one another based on one or more coefficients. In some embodiments, the quadratic form may be a discrete quadratic form in which each of the variables involved in the quadratic form may include a value of -1 or 1

At block 206, vectors that represent the quadratic form may be identified. In some embodiments, the quadratic form may be represented by a matrix of coefficients and one or more vectors that correspond to the matrix of coefficients as described above in relation to Equations (1)-(3).

At block 208, a dimensionality of each vector may be set in which the dimensionality indicates a number of terms included in each vector. The dimensionality may be set so that each vector includes the same dimensionality.

At block 210, unit vectors may be generated based on the dimensionality and a coefficient corresponding to each of the vectors. Because each vector includes the same number of terms when each vector includes the same dimensionality, the vectors may be treated as unit vectors having different amplitudes according to their corresponding coefficient after the dimensionality has been set.

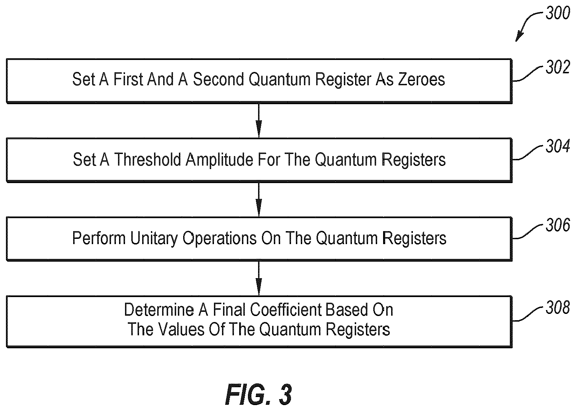

At block 212, one or more unitary operations may be performed to quantize the unit vectors so that the unit vectors represent different quantum states. The unitary operations may include linear transformations of the unit vectors based on the rows and/or the columns of a matrix, A, that represents the coefficients of the unit vectors as described above in relation to Equations (7) and (8). In some embodiments, quantizing the unit vectors may be facilitated by an amplitude amplification process as described above and in relation to the method 300 of Figure 3.

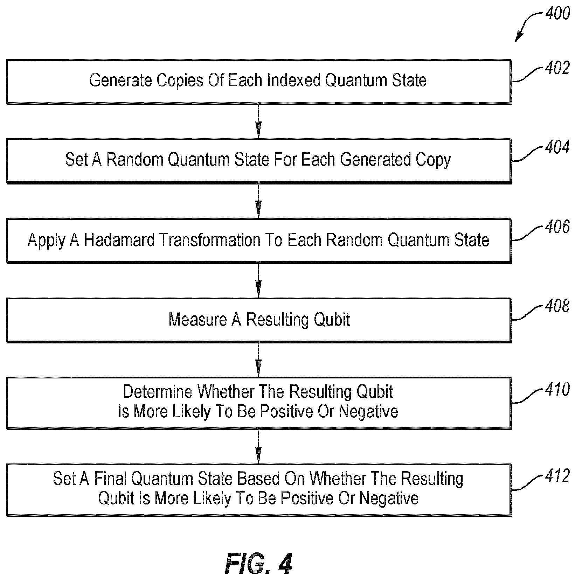

At block 214, a final quantum state may be set based on the quantized unit vectors. In some embodiments, setting the final quantum state may be facilitated by the amplitude amplification process as described above and in relation to the method 300 of Figure 3. Additionally or alternatively, setting the final quantum state may be facilitated by a quantum rounding process as described above and in relation to method 400 of Figure 4.

At block 216, a solution to the optimization problem may be determined based on the final quantum states corresponding to each respective indexed quantum state. The final quantum states may correspond to variable inputs of the quadratic form that represent a feasible solution to the optimization problem as described in relation to the optimization solutions 145 of Figure 1.

Modifications, additions, or omissions may be made to the method 200 without departing from the scope of the disclosure. For example, the designations of different elements in the manner described is meant to help explain concepts described herein and is not limiting. Further, the method 200 may include any number of other elements or may be implemented within other systems or contexts than those described.

Figure 3 is a flowchart of an example method 300 of quantizing unit vectors to determine quantum states according to the present disclosure. The method 300 may be performed by any suitable system, apparatus, or device. For example, the vector module 120, the quantum module 130, and the optimization module 150 may perform one or more operations associated with the method 300. Although illustrated with discrete blocks, the steps and operations associated with one or more of the blocks of the method 300 may be divided into additional blocks, combined into fewer blocks, or eliminated, depending on the particular implementation.

The method 300 may begin at block 302, where a first quantum register and a second quantum register are each set to include initial values of zero.

At block 304, a threshold amplitude may be set for the quantum registers. Setting the threshold amplitude may facilitate performing unitary operations on the quantum registers as described below so that amplitudes of the first quantum register and the second quantum register are increased above the threshold amplitude to increase a probability of returning a value of 0 in response to measuring the first quantum register.

At block 306, unitary operations may be iterative performed on the quantum registers until the threshold amplitude is reached. In some embodiments, first unitary operations may be performed with respect to the first quantum register, and second unitary operations may be performed with respect to the second quantum register in which the first unitary operations and the second unitary operations are related to the coefficients corresponding to the unit vectors. For example, the first unitary operations may correspond to the rows of a matrix representing the coefficients, and the second unitary operations may correspond to the columns of the matrix representing the coefficients or vice versa. Performing the first unitary operations and the second unitary operations may respectively increase amplitudes of the first quantum register (e.g., to a first amplitude value) and the second quantum register (e.g., to a second amplitude value) as described in relation to Equations (7)-(9) in relation to Figure 1.

At block 308, a final coefficient may be determined based on the first amplitude value of the first quantum register and the second amplitude value of the second quantum register after the threshold amplitude is exceeded. In some embodiments, determining the final coefficient may be facilitated according to Equation (10) as described above in relation to Figure 1.

Modifications, additions, or omissions may be made to the method 300 without departing from the scope of the disclosure. For example, the designations of different elements in the manner described is meant to help explain concepts described herein and is not limiting. Further, the method 300 may include any number of other elements or may be implemented within other systems or contexts than those described.

Figure 4 is a flowchart of an example method 400 of quantum rounding according to the present disclosure. The method 400 may be performed by any suitable system, apparatus, or device. For example, the vector module 120, the quantum module 130, and the optimization module 150 may perform one or more operations associated with the method 400. Although illustrated with discrete blocks, the steps and operations associated with one or more of the blocks of the method 400 may be divided into additional blocks, combined into fewer blocks, or eliminated, depending on the particular implementation.

The method 400 may begin at block 402, where copies of each of the indexed quantum states are generated. Because quantum computer systems operate probabilistically, multiple copies of each indexed quantum state may facilitate more accurate determination of whether a resulting qubit is likely to be positive or negative as described in relation to block 410 below.

At block 404, a random quantum state, $|\lambda_k\rangle$, may be set for each generated copy.

At block 406, a Hadamard transformation may be applied to each random quantum state to generate a resulting qubit, $|\psi_k\rangle$, according to Equation (11) as described in relation to Figure 1.

At block 408, the resulting qubit generated by the Hadamard transformation may be measured, and at block 410, whether the resulting qubit is more likely to be positive or more likely to be negative may be determined. In some embodiments, measuring the resulting qubit may return a binary output of 1 or 0 in which an outcome of 1 indicates that a probability of a dot product between the vector, v, and the random quantum state, $\lambda_k$, is negative is greater than the probability of the dot product being positive. An outcome of 0 may indicate the opposite with the probability of the dot product being positive being more likely than the probability of the dot product being negative. The likelihood of the resulting qubit being positive or negative may be represented algorithmically as the following relationships:

$$\Pr[\langle v, \lambda_k \rangle < 0] > \Pr[\langle v, \lambda_k \rangle > 0] \qquad (12)$$

$$\Pr[\langle v, \lambda_k \rangle < 0] < \Pr[\langle v, \lambda_k \rangle > 0] \qquad (13)$$

in which a probability, *Pr,* of the dot product between the vector and the random quantum state, $\langle v, \lambda_k \rangle$ being negative is greater than or less than the probability of the dot product between the vector and the random quantum state being positive depending on the measurement of the resulting qubit.

At block 412, a final quantum state may be set based on whether the resulting qubit is more likely to be positive or more likely to be negative. In some embodiments, a measurement of 1 for the resulting qubit indicating that the dot product between the vector and the random quantum state is more likely to be negative than positive may indicate the final quantum state should be set at a value of -1 or vice versa. In these and other embodiments, a measurement of 0 for the resulting qubit indicating that the dot product between the vector and the random quantum state is more likely to be positive than negative may indicate the final quantum state should be set at a value of 1 or vice versa.

Modifications, additions, or omissions may be made to the method 400 without departing from the scope of the disclosure. For example, the designations of different elements in the manner described is meant to help explain concepts described herein and is not limiting. Further, the method 400 may include any number of other elements or may be implemented within other systems or contexts than those described.

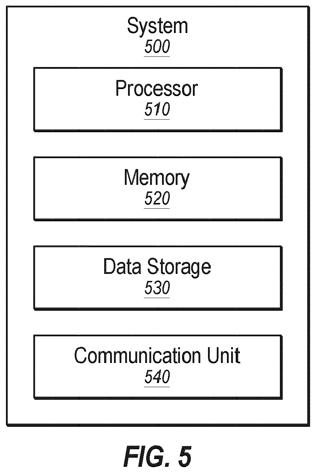

Figure 5 is an example computing system, according to at least one embodiment described in the present disclosure. The computing system 500 may include a processor 510, a memory 520, a data storage 530, and/or a communication unit 540, which all may be communicatively coupled. Any or all of the system 100 of Figure 1 may be implemented as a computing system consistent with the computing system 500.

Generally, the processor 510 may include any suitable special-purpose or general-purpose computer, computing entity, or processing device including various computer hardware or software modules and may be configured to execute instructions stored on any applicable computer-readable storage media. For example, the processor 510 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data.

Although illustrated as a single processor in Figure 5, it is understood that the processor 510 may include any number of processors distributed across any number of network or physical locations that are configured to perform individually or collectively any number of operations described in the present disclosure. In some embodiments, the processor 510 may interpret and/or execute program instructions and/or process data stored in the memory 520, the data storage 530, or the memory 520 and the data storage 530. In some embodiments, the processor 510 may fetch program instructions from the data storage 530 and load the program instructions into the memory 520.

After the program instructions are loaded into the memory 520, the processor 510 may execute the program instructions, such as instructions to cause the computing system 500 to perform the operations of the method 200 of Figure 2, the method 300 of Figure 3, or the method 400 of Figure 4. For example, the computing system 500 may execute the program instructions to obtain a quadratic form corresponding to an optimization problem, identify vectors that represent the quadratic form, set a dimensionality of each vector, generate unit vectors, perform unitary operations to quantize the unit vectors, set a final quantum state based on the quantized unit vectors, and/or determine a solution to the optimization problem based on the final quantum state.

The memory 520 and the data storage 530 may include computer-readable storage media or one or more computer-readable storage mediums for having computer-executable instructions or data structures stored thereon. Such computer-readable storage media may be any available media that may be accessed by a general-purpose or special-purpose computer, such as the processor 510. For example, the memory 520 and/or the data storage 530 may include the quadratic forms 110, the unit vectors 125, the quantum states 135, or the optimization solution 145 of Figure 1. In some embodiments, the computing system 500 may or may not include either of the memory 520 and the data storage 530.

By way of example, and not limitation, such computer-readable storage media may include non-transitory computer-readable storage media including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other storage medium which may be used to store desired program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 510 to perform a particular operation or group of operations.

The communication unit 540 may include any component, device, system, or combination thereof that is configured to transmit or receive information over a network. In some embodiments, the communication unit 540 may communicate with other devices at other locations, the same location, or even other components within the same system. For example, the communication unit 540 may include a modem, a network card (wireless or wired), an optical communication device, an infrared communication device, a wireless communication device (such as an antenna), and/or chipset (such as a Bluetooth device, an 802.6 device (e.g., Metropolitan Area Network (MAN)), a WiFi device, a WiMax device, cellular communication facilities, or others), and/or the like. The communication unit 540 may permit data to be exchanged with a network and/or any other devices or systems described in the present disclosure. For example, the communication unit 540 may allow the system 500 to communicate with other systems, such as computing devices and/or other networks.

One skilled in the art, after reviewing this disclosure, may recognize that modifications, additions, or omissions may be made to the system 500 without departing from the scope of the present disclosure. For example, the system 500 may include more or fewer components than those explicitly illustrated and described.

The foregoing disclosure is not intended to limit the present disclosure to the precise forms or particular fields of use disclosed. As such, it is contemplated that various alternate embodiments and/or modifications to the present disclosure, whether explicitly described or implied herein, are possible in light of the disclosure. Having thus described embodiments of the present disclosure, it may be recognized that changes may be made in form and detail without departing from the scope of the present disclosure. Thus, the present disclosure is limited only by the claims.

In some embodiments, the different components, modules, engines, and services described herein may be implemented as objects or processes that execute on a computing system (e.g., as separate threads). While some of the systems and processes described herein are generally described as being implemented in software (stored on and/or executed by general purpose hardware), specific hardware implementations or a combination of software and specific hardware implementations are also possible and contemplated.

Terms used in the present disclosure and especially in the appended claims (e.g., bodies of the appended claims) are generally intended as "open terms" (e.g., the term "including" should be interpreted as "including, but not limited to.").

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is expressly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc.

Further, any disjunctive word or phrase preceding two or more alternative terms, whether in the description, claims, or drawings, should be understood to contemplate the possibilities of including one of the terms, either of the terms, or both of the terms. For example, the phrase "A or B" should be understood to include the possibilities of "A" or "B" or "A and B."

All examples and conditional language recited in the present disclosure are intended for pedagogical objects to aid the reader in understanding the present disclosure and the concepts contributed by the inventor to furthering the art, and are to be construed as being without limitation to such specifically recited examples and conditions. Although embodiments of the present disclosure have been described in detail, various changes, substitutions, and alterations could be made hereto without departing from the spirit and scope of the present disclosure.

Further examples of the present application are as follows:

E1. A method, comprising:

obtaining an optimization problem that includes a plurality of discrete variable choices;
determining a quadratic form corresponding to the optimization problem;
identifying a plurality of vectors that represents the quadratic form;
setting a dimensionality of each vector included in the plurality of vectors, the dimensionality indicating a number of terms included in each vector;
generating a first set of unit vectors based on the dimensionality of one or more vectors from the plurality of vectors and based on a coefficient corresponding to each of the vectors;
perform one or more unitary operations to quantize each respective unit vector included in the first updated set as a respective indexed quantum state;
setting a respective final quantum state corresponding to each respective indexed quantum state; and
determining one or more solutions to the optimization problem based on the final quantum state corresponding to each respective indexed quantum state.

E2. The method of example 1, wherein setting the dimensionality of a vector included in the plurality of vectors includes:

computing a square of each term included in the vector;
summing the square of each term; and
computing a square root of the sum of the square of each term.

E3. The method of example 1, wherein:

the coefficient corresponding to each of the vectors is determined from a coefficient matrix, a particular coefficient representing an intersection between a matrix row and a matrix column; and
the unitary operations include first unitary operations corresponding to each matrix row and second unitary operations corresponding to each matrix column.

E4. The method of example 1, wherein performing the unitary operations to quantize each respective unit vector and setting a respective final quantum state corresponding to each respective indexed quantum state comprises:

setting a first quantum register and a second quantum register as zeroes, the first quantum register representing a quantum state index and the second quantum register representing the unit vectors;
setting a threshold amplitude for the first quantum register and the second quantum register;
performing first unitary operations on the first quantum register and second unitary operations on the second quantum register until the threshold amplitude is exceeded, wherein:

the first unitary operations and the second unitary operations are related to the coefficients corresponding to the unit vectors; and
performing the first unitary operations and the second unitary operations increases an amplitude of the first quantum register and the second quantum register; and

determining a final coefficient based on a first value of the first quantum register and a second value of the second quantum register after the threshold amplitude is exceeded.

E5. The method of example 4, wherein setting a respective final quantum state corresponding to each respective indexed quantum state and determining the one or more solutions to the optimization problem comprises:

generating one or more copies of each respective indexed quantum state;
setting a random quantum state corresponding to each of the generated copies;
applying a Hadamard transformation to the random quantum state corresponding to each of the generated copies;
measuring a resulting qubit based on the Hadamard transformation applied to the random quantum state;
determining whether a probability of the resulting qubit is more likely to be positive or more likely to be negative based on the measuring; and
setting the respective final quantum state corresponding to each respective indexed quantum state as -1 responsive to the probability of the resulting qubit being more likely to be negative.

E6. The method of example 1, wherein the optimization problem is a community detection problem relating to users on a social media network, wherein each of the solutions to the community detection problem includes one or more groups of users on the social media network.

E7. The method of example 1, wherein the optimization problem is a correlation clustering problem involving a plurality of data points, wherein each of the solutions to the correlation clustering problem includes partitioning one or more of the data points of the plurality into one or more groups.

E8. The method of example 1, wherein the optimization problem is a maximum cut problem involving a graph dataset including a plurality of nodes and a plurality of edges connecting each node of the plurality of nodes, wherein each of the solutions to the maximum cut problem includes a division of the graph dataset into a first set of nodes and a second set of nodes that maximizes a number of edges between nodes included in the first set of nodes and nodes included in the second set of nodes.

E9. One or more non-transitory computer-readable storage media configured to store instructions that, in response to being executed, cause a system to perform operations, the operations comprising:

obtaining an optimization problem that includes a plurality of discrete variable choices;
determining a quadratic form corresponding to the optimization problem;
identifying a plurality of vectors that represents the quadratic form;
setting a dimensionality of each vector included in the plurality of vectors, the dimensionality indicating a number of terms included in each vector;
generating a first set of unit vectors based on the dimensionality of one or more vectors from the plurality of vectors and based on a coefficient corresponding to each of the vectors;
perform one or more unitary operations to quantize each respective unit vector included in the first updated set as a respective indexed quantum state;
setting a respective final quantum state corresponding to each respective indexed quantum state; and
determining one or more solutions to the optimization problem based on the final quantum state corresponding to each respective indexed quantum state.

E10. The one or more non-transitory computer-readable storage media of example 9, wherein setting the dimensionality of a vector included in the plurality of vectors includes:

computing a square of each term included in the vector;
summing the square of each term; and
computing a square root of the sum of the square of each term.

E11. The one or more non-transitory computer-readable storage media of example 9, wherein:

the coefficient corresponding to each of the vectors is determined from a coefficient matrix, a particular coefficient representing an intersection between a matrix row and a matrix column; and
the unitary operations include first unitary operations corresponding to each matrix row and second unitary operations corresponding to each matrix column.

E12. The one or more non-transitory computer-readable storage media of example 9, wherein performing the unitary operations to quantize each respective unit vector and setting a respective final quantum state corresponding to each respective indexed quantum state comprises:

setting a first quantum register and a second quantum register as zeroes, the first quantum register representing a quantum state index and the second quantum register representing the unit vectors;
setting a threshold amplitude for the first quantum register and the second quantum register;
performing first unitary operations on the first quantum register and second unitary operations on the second quantum register until the threshold amplitude is exceeded, wherein:

the first unitary operations and the second unitary operations are related to the coefficients corresponding to the unit vectors; and
performing the first unitary operations and the second unitary operations increases an amplitude of the first quantum register and the second quantum register; and

determining a final coefficient based on a first value of the first quantum register and a second value of the second quantum register after the threshold amplitude is exceeded.

E13. The one or more non-transitory computer-readable storage media of example 12, wherein setting a respective final quantum state corresponding to each respective indexed quantum state and determining the one or more solutions to the optimization problem comprises:

generating one or more copies of each respective indexed quantum state;
setting a random quantum state corresponding to each of the generated copies;
applying a Hadamard transformation to the random quantum state corresponding to each of the generated copies;
measuring a resulting qubit based on the Hadamard transformation applied to the random quantum state;
determining whether a probability of the resulting qubit is more likely to be positive or more likely to be negative based on the measuring; and

setting the respective final quantum state corresponding to each respective indexed quantum state as -1 responsive to the probability of the resulting qubit being more likely to be negative.

E14. The one or more non-transitory computer-readable storage media of example 8, wherein the optimization problem is a community detection problem relating to users on a social media network, wherein each of the solutions to the community detection problem includes one or more groups of users on the social media network.

E15. The one or more non-transitory computer-readable storage media of example 8, wherein the optimization problem is a correlation clustering problem involving a plurality of data points, wherein each of the solutions to the correlation clustering problem includes partitioning one or more of the data points of the plurality into one or more groups.

E16. The one or more non-transitory computer-readable storage media of example 8, wherein the optimization problem is a maximum cut problem involving a graph dataset including a plurality of nodes and a plurality of edges connecting each node of the plurality of nodes, wherein each of the solutions to the maximum cut problem includes a division of the graph dataset into a first set of nodes and a second set of nodes that maximizes a number of edges between nodes included in the first set of nodes and nodes included in the second set of nodes.

E17. A system, comprising:

one or more processors; and
one or more non-transitory computer-readable storage media configured to store instructions that, in response to being executed, cause a system to perform operations, the operations comprising:

obtaining an optimization problem that includes a plurality of discrete variable choices;
determining a quadratic form corresponding to the optimization problem;
identifying a plurality of vectors that represents the quadratic form;
setting a dimensionality of each vector included in the plurality of vectors, the dimensionality indicating a number of terms included in each vector;
generating a first set of unit vectors based on the dimensionality of one or more vectors from the plurality of vectors and based on a coefficient corresponding to each of the vectors;
perform one or more unitary operations to quantize each respective unit vector included in the first updated set as a respective indexed quantum state;
setting a respective final quantum state corresponding to each respective indexed quantum state; and
determining one or more solutions to the optimization problem based on the final quantum state corresponding to each respective indexed quantum state.

E18. The system of example 17, wherein:

the coefficient corresponding to each of the vectors is determined from a coefficient matrix, a particular coefficient representing an intersection between a matrix row and a matrix column; and
the unitary operations include first unitary operations corresponding to each matrix row and second unitary operations corresponding to each matrix column.

E19. The system of example 17, wherein performing the unitary operations to quantize each respective unit vector and setting a respective final quantum state corresponding to each respective indexed quantum state comprises:

setting a first quantum register and a second quantum register as zeroes, the first quantum register representing a quantum state index and the second quantum register representing the unit vectors;
setting a threshold amplitude for the first quantum register and the second quantum register;
performing first unitary operations on the first quantum register and second unitary operations on the second quantum register until the threshold amplitude is exceeded, wherein:

the first unitary operations and the second unitary operations are related to the coefficients corresponding to the unit vectors; and
performing the first unitary operations and the second unitary operations increases an amplitude of the first quantum register and the second quantum register; and

determining a final coefficient based on a first value of the first quantum register and a second value of the second quantum register after the threshold amplitude is exceeded.

E20. The system of example 19, wherein setting a respective final quantum state corresponding to each respective indexed quantum state and determining the one or more solutions to the optimization problem comprises:

generating one or more copies of each respective indexed quantum state;
setting a random quantum state corresponding to each of the generated copies;
applying a Hadamard transformation to the random quantum state corresponding to each of the generated copies;
measuring a resulting qubit based on the Hadamard transformation applied to the random quantum state;
determining whether a probability of the resulting qubit is more likely to be positive or more likely to be negative based on the measuring; and
setting the respective final quantum state corresponding to each respective indexed quantum state as -1 responsive to the probability of the resulting qubit being more likely to be negative.

**Claims**

1. A method, comprising:

obtaining an optimization problem that includes a plurality of discrete variable choices;
determining a quadratic form corresponding to the optimization problem;
identifying a plurality of vectors that represents the quadratic form;
setting a dimensionality of each vector included in the plurality of vectors, the dimensionality indicating a number of terms included in each vector;
generating a first set of unit vectors based on the dimensionality of one or more vectors from the plurality of vectors and based on a coefficient corresponding to each of the vectors;
perform one or more unitary operations to quantize each respective unit vector included in the first updated set as a respective indexed quantum state;
setting a respective final quantum state corresponding to each respective indexed quantum state; and
determining one or more solutions to the optimization problem based on the final quantum state corresponding to each respective indexed quantum state.

2. The method of claim 1, wherein setting the dimensionality of a vector included in the plurality of vectors includes:

computing a square of each term included in the vector;
summing the square of each term; and
computing a square root of the sum of the square of each term.

3. The method of claim 1, wherein:

the coefficient corresponding to each of the vectors is determined from a coefficient matrix, a particular coefficient representing an intersection between a matrix row and a matrix column; and
the unitary operations include first unitary operations corresponding to each matrix row and second unitary operations corresponding to each matrix column.

4. The method of claim 1, wherein performing the unitary operations to quantize each respective unit vector and setting a respective final quantum state corresponding to each respective indexed quantum state comprises:

setting a first quantum register and a second quantum register as zeroes, the first quantum register representing a quantum state index and the second quantum register representing the unit vectors;
setting a threshold amplitude for the first quantum register and the second quantum register;
performing first unitary operations on the first quantum register and second unitary operations on the second quantum register until the threshold amplitude is exceeded, wherein:

the first unitary operations and the second unitary operations are related to the coefficients corresponding to the unit vectors; and
performing the first unitary operations and the second unitary operations increases an amplitude of the first quantum register and the second quantum register; and

determining a final coefficient based on a first value of the first quantum register and a second value of the second quantum register after the threshold amplitude is exceeded.

5. The method of claim 4, wherein setting a respective final quantum state corresponding to each respective indexed quantum state and determining the one or more solutions to the optimization problem comprises:

generating one or more copies of each respective indexed quantum state;
setting a random quantum state corresponding to each of the generated copies;
applying a Hadamard transformation to the random quantum state corresponding to each of the generated copies;
measuring a resulting qubit based on the Hadamard transformation applied to the random quantum state;
determining whether a probability of the resulting qubit is more likely to be positive or more likely to be negative based on the measuring; and
setting the respective final quantum state corresponding to each respective indexed quantum state as -1 responsive to the probability of the resulting qubit being more likely to be negative.

6. The method of claim 1, wherein the optimization problem is a community detection problem relating to users on a social media network, wherein each of the solutions to the community detection problem includes one or more groups of users on the social media network.

7. The method of claim 1, wherein the optimization problem is a correlation clustering problem involving a plurality of data points, wherein each of the solutions to the correlation clustering problem includes partitioning one or more of the data points of the plurality into one or more groups.

8. The method of claim 1, wherein the optimization problem is a maximum cut problem involving a graph dataset including a plurality of nodes and a plurality of edges connecting each node of the plurality of nodes, wherein each of the solutions to the maximum cut problem includes a division of the graph dataset into a first set of nodes and a second set of nodes that maximizes a number of edges between nodes included in the first set of nodes and nodes included in the second set of nodes.

9. One or more non-transitory computer-readable storage media configured to store instructions that, in response to being executed, cause a system to perform operations, the operations comprising:

obtaining an optimization problem that includes a plurality of discrete variable choices;
determining a quadratic form corresponding to the optimization problem;
identifying a plurality of vectors that represents the quadratic form;
setting a dimensionality of each vector included in the plurality of vectors, the dimensionality indicating a number of terms included in each vector;
generating a first set of unit vectors based on the dimensionality of one or more vectors from the plurality of vectors and based on a coefficient corresponding to each of the vectors;
perform one or more unitary operations to quantize each respective unit vector included in the first updated set as a respective indexed quantum state;
setting a respective final quantum state corresponding to each respective indexed quantum state; and
determining one or more solutions to the optimization problem based on the final quantum state corresponding to each respective indexed quantum state.

10. A system, comprising:

one or more processors; and
one or more non-transitory computer-readable storage media configured to store instructions that, in response to being executed, cause a system to perform operations, the operations comprising:

obtaining an optimization problem that includes a plurality of discrete variable choices;
determining a quadratic form corresponding to the optimization problem;
identifying a plurality of vectors that represents the quadratic form;
setting a dimensionality of each vector included in the plurality of vectors, the dimensionality indicating a number of terms included in each vector;
generating a first set of unit vectors based on the dimensionality of one or more vectors from the plurality of vectors and based on a coefficient corresponding to each of the vectors;

perform one or more unitary operations to quantize each respective unit vector included in the first updated set as a respective indexed quantum state;

setting a respective final quantum state corresponding to each respective indexed quantum state; and determining one or more solutions to the optimization problem based on the final quantum state corresponding to each respective indexed quantum state.

EP 4 254 276 A1

*FIG. 1*

200

Obtain An Optimization Problem — 202

Obtain A Quadratic Form Corresponding To The Optimization Problem — 204

Identify Vectors That Represent The Quadratic Form — 206

Set A Dimensionality Of Each Vector — 208

Generate Unit Vectors Based On The Dimensionality And A Coefficient Corresponding To Each Vector — 210

Perform Unitary Operations To Quantize The Unit Vectors — 212

Set A Final Quantum State Based On The Quantized Unit Vectors — 214

Determine A Solution To The Optimization Problem Based On The Final Quantum State — 216

*FIG. 2*

300

Set A First And A Second Quantum Register As Zeroes — 302

Set A Threshold Amplitude For The Quantum Registers — 304

Perform Unitary Operations On The Quantum Registers — 306

Determine A Final Coefficient Based On
The Values Of The Quantum Registers — 308

## FIG. 3

_400_

| Generate Copies Of Each Indexed Quantum State | _402_ |

| Set A Random Quantum State For Each Generated Copy | _404_ |

| Apply A Hadamard Transformation To Each Random Quantum State | _406_ |

| Measure A Resulting Qubit | _408_ |

| Determine Whether The Resulting Qubit Is More Likely To Be Positive Or Negative | _410_ |

| Set A Final Quantum State Based On Whether The Resulting Qubit Is More Likely To Be Positive Or Negative | _412_ |

*FIG. 4*

System
*500*

Processor
*510*

Memory
*520*

Data Storage
*530*

Communication Unit
*540*

*FIG. 5*

Europäisches
Patentamt
European
Patent Office
Office européen
des brevets

# EUROPEAN SEARCH REPORT

Application Number

EP 23 15 8503

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NEGRE CHRISTIAN F. A. ET AL: "Detecting multiple communities using quantum annealing on the D-Wave system", PLOS ONE, vol. 15, no. 2, 13 February 2020 (2020-02-13), XP055933551, DOI: 10.1371/journal.pone.0227538 * page 1 - page 12, paragraph 4 * | 1-10 | INV. G06N10/60 |
| A | BEAUDRAP NIEL DE ET AL: "Quadratic Form Expansions for Unitaries", 30 January 2008 (2008-01-30), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 29 - 46, XP047404146, ISBN: 978-3-540-74549-5 * the whole document * | 1-10 | |
| A | AVRADIP MANDAL ET AL: "Compressed Quadratization of Higher Order Binary Optimization Problems", ARXIV.ORG, CORNELL UNIVERSITY LIBRARY, 201 OLIN LIBRARY CORNELL UNIVERSITY ITHACA, NY 14853, 2 January 2020 (2020-01-02), XP081571151, * the whole document * | 1-10 | **TECHNICAL FIELDS SEARCHED (IPC)** G06N |
| A | EP 3 786 816 A1 (FUJITSU LTD [JP]) 3 March 2021 (2021-03-03) * the whole document * | 1-10 | |
| A | US 2021/150400 A1 (PISTOIA MARCO [US] ET AL) 20 May 2021 (2021-05-20) * the whole document * | 1-10 | |

The present search report has been drawn up for all claims

| Place of search | Date of completion of the search | Examiner |
|---|---|---|
| The Hague | 6 July 2023 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 23 15 8503

This annex lists the patent family members relating to the patent documents cited in the above-mentioned European search report.
The members are as contained in the European Patent Office EDP file on
The European Patent Office is in no way liable for these particulars which are merely given for the purpose of information.

06−07−2023

| Patent document cited in search report | | Publication date | Patent family member(s) | | Publication date |
|---|---|---|---|---|---|
| EP 3786816 | A1 | 03−03−2021 | EP | 3786816 A1 | 03−03−2021 |
| | | | JP | 2021039751 A | 11−03−2021 |
| | | | US | 2021064687 A1 | 04−03−2021 |
| US 2021150400 | A1 | 20−05−2021 | NONE | | |

For more details about this annex : see Official Journal of the European Patent Office, No. 12/82